# EUROPÄISCHE PATENTSCHRIFT

(11) **EP 3 724 005 B1**
(45) Veröffentlichungstag und Bekanntmachung des Hinweises auf die Patenterteilung: **02.03.2022**
(21) Anmeldenummer: 18782348.9
(22) Anmeldetag: 25.09.2018
(51) Int. Cl.: B60C 11/12, B60C 11/03

(54) **FAHRZEUGLUFTREIFEN**
PNEUMATIC TIRE
PNEU

(30) Priorität: 12.12.2017 DE 102017222513
(43) Veröffentlichungstag der Anmeldung: 21.10.2020
(73) Patentinhaber: Continental Reifen Deutschland GmbH, 30165 Hannover (DE)
(72) Erfinder: SCHLITTENHARD, Jan, 30419 Hannover (DE); BAUER, Claudia, 30419 Hannover (DE); BERGER, Christoph, 30419 Hannover (DE)
(74) Vertreter: Continental Corporation
(86) Internationale Anmeldenummer: PCT/EP2018/075872
(87) Internationale Veröffentlichungsnummer: WO 2019/115039

(56) Entgegenhaltungen:
- JP-A- 2000 158 916
- JP-A- 2012 153 157

## Beschreibung

Die Erfindung betrifft einen Fahrzeugluftreifen mit einem Laufstreifen mit zumindest einer Profilrippe oder zumindest einer Profilblöcke aufweisenden oder profilblockartig strukturierten Profilblockreihe sowie mit in der vorgesehen Profiltiefe ausgeführten Rillen, wobei zumindest eine Profilrippe bzw. die Profilblöcke in einer Blockreihe mit unter einem Winkel ≤ 45° zur axialen Richtung verlaufenden Quernuten, welche an der Laufstreifenperipherie eine Breite von 2,0 mm bis 5,0 mm und eine Tiefe von höchstens 60 % der Profiltiefe aufweisen, versehen ist bzw. sind, wobei sich jede Quernut aus Abschnitten zusammensetzt, die zueinander abgewinkelt verlaufen, wobei über die Erstreckung der Quernut an ihrem Boden bzw. ihrem radial inneren Ende ein Einschnitt anschließt, welcher eine Breite von 0,3 mm bis 1,2 mm aufweist und in radialer Richtung bis in eine Tiefe reicht, die höchstens der Profiltiefe entspricht, wobei der Einschnitt dem Verlauf der abgewinkelten Abschnitte der Quernut folgt.

Ein derartiger Fahrzeugluftreifen ist beispielsweise aus der JP 2012 153 157 A bekannt. Dieser Fahrzeugluftreifen weist einen Laufstreifen mit zwei mittleren Profilrippen, welche durch Umfangsrillen begrenzt sind, auf. In jeder mittleren Profilrippe ist eine Anzahl von Quernuten ausgebildet, welche schmäler sind als die Umfangsrillen und die Profilrippe durchqueren. Die Quernuten setzen sich in Draufsicht aus drei zueinander gewinkelt verlaufenden Abschnitten zusammen, wobei die beiden äußeren Abschnitte parallel zueinander orientiert sind. Die Quernuten weisen eine Breite von 2,0 mm bis 5,0 mm und in radialer Richtung eine Tiefe von 1,5 mm bis 3,5 mm auf. In jeder Quernut ist ein über die Erstreckung der Quernut verlaufender Einschnitt ausgebildet, welcher an den Boden der Quernut anschließt, eine Breite von 0,7 mm bis 1,5 mm und in radialer Richtung bis in eine Tiefe von 50% bis 90% der Profiltiefe aufweist. Bevorzugter Weise sind in der Profilrippe ferner schmale Umfangsnuten ausgebildet, welche zwischen in Umfangsrichtung aufeinanderfolgenden Quernuten verlaufen. Die getroffenen Maßnahmen sollen im Hinblick auf die Nassgriffeigenschaften günstig sein.

Aus der JP 2000 158 916 A ist ein Fahrzeugluftreifen mit einem Laufstreifen mit fünf Profilrippen bekannt. Der Laufstreifen weist zwei schulterseitige Profilrippen, eine im Bereich des Reifenzenits verlaufende zentrale Profilrippe und zwei weitere Profilrippen auf. In der mittleren Profilrippe sind im Inneren der Profilrippe endende Quernuten ausgebildet, wobei zwischen den in der Profilrippe liegenden Enden der Quernuten Umfangsnuten verlaufen, welche seichter sind als die Quernuten und von deren Nutgrund jeweils ein Einschnitt ausgeht. In den schulterseitigen Profilrippen und in den zwei weiteren Profilrippen sind jeweils Quernuten ausgebildet, welche in die Umfangsrillen einmünden und von deren Nutgrund ebenfalls jeweils ein Einschnitt ausgeht. Ein Reifen mit einem derart ausgeführter Laufstreifen soll unter anderem eine gute Schneeperformance aufweisen.

In der EP 2 965 925 A1 ist ferner ein Fahrzeugluftreifen mit einem Laufstreifen offenbart, welcher, wie es allgemein bekannt und üblich ist, gemäß einem Verfahren der Pitchlängenvariation geräuschoptimiert ist und schulterseitig Profilblockreihen aufweist, deren Profilblöcke infolge der Pitchlängenvariation größere und kleinere Umfangslängen aufweisen. In den Schulterblöcken, die in den Pitches mit der größten Umfangslänge verlaufen, ist jeweils eine zusätzliche, gerade verlaufende Quernut ausgebildet, die den Schulterblock im Verhältnis 1:1 bis 2:3 in zwei Schulterblockteile gliedert, wobei in den Schulterblöcken, die in den Pitches mit der kleinsten Umfangslänge verlaufen, keine zusätzliche Quernut vorgesehen ist. Die Breite der zusätzlichen Quernuten beträgt 1,0 mm bis 3,0 mm, ihre Tiefe 50 % bis 100 % der Tiefe der zwischen den Schulterblöcken verlaufenden Querrillen. Durch die Zweiteilung der Schulterblöcke in den Pitches mit größerer Umfangslänge werden die Umfangssteifigkeit und die Quersteifigkeit der Schulterblöcke insgesamt über den Laufstreifenumfang gleichmäßiger. Dieser Effekt wirkt sich vor allem positiv auf den Laufstreifenabrieb aus. Aus der DE 10 2008 037 563 A1 ist ein Fahrzeugluftreifen bekannt, dessen Laufstreifen durch Umfangsrillen in in Umfangsrichtung umlaufende Profilelemente, wie Profilblockreihen oder Profilrippen gegliedert ist, wobei Profilelemente vorgesehen sind, welche mit in axialer Richtung und parallel zueinander verlaufenden Einschnitten mit einer Breite von 0,4 mm bis 0,8 mm versehen sind. Diese Einschnitte wechseln mit breiteren Einschnitten, die eine Breite von 1,0 mm bis 4,0 mm aufweisen, ab, wobei jedem breiten Einschnitt zumindest ein schmaler Einschnitt benachbart ist. Sämtliche Einschnitte reichen zumindest abschnittsweise bis in eine Tiefe, die geringer ist als die Profiltiefe. Dieser Fahrzeugluftreifen ist ein für den Wintereinsatz besonders geeigneter Reifen, wobei die breiten Einschnitte innerhalb der Profilelemente zusätzliche Kanten zur Verfügung stellen, die analog zu Blockkanten einen Fräseffekt in Schnee bewirken. Die breiten Einschnitte können sich auch gut mit Schnee auffüllen und derart die Schnee-Schnee-Reibung verbessern. Diese bekannten, breiteren Einschnitte sowie auch die aus der EP 2 965 925 A1 bekannten Quernuten verlaufen gerade und neigen auf Untergründen bzw. Straßen, auf welchen Bruchsteinsplit aufgestreut ist, zum Einfangen der kleineren Steine des Splits. Diese eingefangenen Steine verursachen diverse Probleme, unter anderem das sogenannte stone drilling, welches mit einer strukturellen Beschädigung des Reifenunterbaus einhergehen kann, ferner einen unregelmäßigen Abrieb durch Verformung der Profilelemente und Vibrationen durch Umwucht des Reifens. Darüber hinaus besteht die Gefahr, dass diese Steinchen, wenn sie bei höheren Fahrgeschwindigkeiten aus dem Laufstreifen herausgeschleudert werden, Steinschäden, etwa Lackschäden und Schäden in Windschutzscheiben, in nachfahrenden Fahrzeugen verursachen.

Der Erfindung liegt die Aufgabe zugrunde, bei einem Fahrzeugluftreifen der eingangs genannten Art die Brems- und Traktionseigenschaften auf schneeigem Untergrund, insbesondere den bereits erwähnten Fräseffekt, weiter zu verbessern und das Phänomen des Einfangens von Streusplitteilchen deutlich zu reduzieren.

Gelöst wird die gestellte Aufgabe erfindungsgemäß durch einen Luftreifen nach Anspruch 1.

Durch die Ausführung der Quernut mit zueinander abgewinkelt verlaufenden Abschnitten wird der Effekt des Einfangens der kleinen Partikel von Bruchsteinsplit deutlich reduziert da diese Partikel in die Abschnitte weniger leicht eindringen als in eine gradlinig verlaufende Quernut. Darüber hinaus bewirkt die Ausführung der Quernuten mit zueinander abgewinkelt verlaufenden Abschnitten verbesserte Bremseigenschaften auf Schnee durch Erhöhung der Effektivität des Fräseffektes, ferner eine Verbesserung der Traktionseigenschaften auf Schnee durch das gegenüber gerade verlaufenden Quernuten grössere Volumen der Quernuten, wodurch auch die Schnee-Schnee-Reibung verbessert wird. Der am Boden bzw. radial inneren Ende der Quernut anschliessende Einschnitt bewirkt unter Brems-und Traktionsbelastungen Abstützeffekte, die das Verklemmen von Steinchen zusätzlich behindern und die Seitenführung auf Schnee vorteilhaft beeinflussen.

Durch die getroffenen Maßnahmen lassen sich ferner besondere Abstützeffekte erzielen. Bei einer bevorzugten Ausführungsform der Erfindung setzt sich der Einschnitt aus zueinander abgewinkelt verlaufenden Abschnitten zusammen, die dem Verlauf der abgewinkelten Abschnitte der Quernut folgen. Diese Ausführung begünstigt unter Brems-und Traktionsbelastungen eine gegenseitige Abstützung der Einschnittwände in den einzelnen Abschnitten des Einschnittes.

Gemäß einer weiteren bevorzugten Ausführung weist die Quernut, insbesondere in sämtlichen Abschnitten, Nutflanken auf, die in radialer Richtung oder unter einem Winkel, welcher bis zu 5° von der radialen Richtung abweicht, verlaufen. Solche Quernuten besitzen daher in ihrer radialen Erstreckung eine konstante oder weitgehend konstante Breite und daher ein für die Schnee-Schnee-Reibung vorteilhaftes Aufnahmevolumen für Schnee.

Die Art der Abwinkelung der Abschnitte der Quernut und der Einschnitte kann auf unterschiedliche Weise erfolgen. Besonders vorteilhaft zur Erzielung der oben erwähnten Effekte ist es, wenn die Abschnitte der Quernut, gegebenenfalls bis auf ihre Endabschnitte, zickzack- oder wellenförmig verlaufen, ferner, wenn die Abschnitte der Quernut, ebenfalls gegebenenfalls bis auf ihre Endabschnitte, trapezförmig verlaufen.

Die erwähnte Trapezform ist besonders vorteilhaft für eine Optimierung der Effektivität des oben erwähnten Fräseffektes, ferner eine Optimierung der Traktionseigenschaften auf Schnee sowie, je nach Ausgestaltung, auch dafür, ein Verklemmen von Steinchen zu verhindern.

Bei einer bevorzugten, diesbezüglich vorteilhaften Ausführung weisen die trapezförmig verlaufenden Abschnitte Trapez-Schenkelabschnitte und diese verbindende Abschnitte auf, welche in Draufsicht eine Anzahl von aneinander anschließenden, abwechselnd zur einen und zur anderen Umfangsrichtung weisenden, basislosen, vorzugsweise gleichschenkeligen Trapezen bilden, wobei die Trapez-Schenkelabschnitte und die diese verbindenden Abschnitte in Draufsicht eine längere und eine kürzere Nutflanke aufweisen.

Die Anordnung der Einschnitte bzw. der Einschnittabschnitte am Boden bzw. am radial inneren Ende der einzelnen Abschnitte der Quernut kann ebenfalls auf unterschiedliche Weise und auf für die oben genannten Effekte besonders vorteilhafte Weise erfolgen.

Bei einer diesbezüglich besonders bevorzugten Ausführung verlaufen die Nutflanken der Quernut in sämtlichen Abschnitten in radialer Richtung oder unter einem Winkel von bis zu 5° zur radialen Richtung, wobei in den verbindenden Abschnitten der Quernut die Einschnittabschnitte jeweils mit einer Einschnittwand an die in Draufsicht längere Nutflanke anschließen und wobei in den Trapez -Schenkelabschnitten der Quernut die Abschnitte des Einschnittes die Enden der Abschnitte des Einschnittes in den verbindenden Abschnitten miteinander verbinden.

Bei einer weiteren, besonders bevorzugten Ausführung der Anordnung der Einschnittabschnitte innerhalb der Quernutabschnitte verläuft in den die Trapez-Schenkelabschnitte verbindenden Abschnitten der Quernut die in Draufsicht längere Nutflanke in radialer Richtung oder unter einem Winkel von bis zu 5° zur radialen Richtung, wobei die dieser gegenüberliegende Nutflanke unter einem Winkel von 10° bis 20° zur radialen Richtung verläuft, wobei in den aufeinanderfolgenden Abschnitten der Quernut die Position der Nutflanken abwechselt und der vom Boden der Quernut ausgehende Einschnitt mit einer Einschnittwand jeweils an jene Nutflanke anschließt, welche unter dem Winkel von 10° bis 30° zur radialen Richtung verläuft.

Bei einer weiteren, besonders vorteilhaften und vor allem ein Einfangen von Steinchen besonders effektiv verhindernden Ausführungsform bzw. Ausgestaltung verläuft in den verbindenden Abschnitten die in Draufsicht längere Nutflanke in radialer Richtung oder unter einem Winkel von bis zu 5° zur radialen Richtung und die gegenüberliegende Nutflanke unter einem Winkel von 30° bis 40° zur radialen Richtung, wobei jede dieser Nutflanken an ihrem radial inneren Ende in je eine Einschnittwand des betreffenden Abschnittes des Einschnittes übergeht und wobei in den Trapez -Schenkelabschnitten die Nutflanken dreieckige, unter einem konstanten Winkel zur radialen Richtung orientierte Flächen sind, welche ihre geringste, Null betragende radiale Erstreckung jeweils beim Eckpunkt zu der in radialer Richtung verlaufenden Nutflanke eines verbindenden Abschnittes und ihre größte radiale Erstreckung bei der Eckschnittstelle zur Nutflanke eines verbindenden Abschnittes aufweisen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine vergrößerte Draufsicht auf einen Profilblock eines Laufstreifens eines Fahrzeugluftreifens mit einer nicht erfindungsgemäßen Ausführungsvariante,
Fig. 1a eine Schnittdarstellung entlang der Linie Ia-Ia der Fig. 1,
Fig. 2 eine vergrößerte Draufsicht auf einen Profilblock mit einer Ausführungsvariante der Erfindung,
Fig. 2a eine Schnittdarstellung entlang der Linie IIa-IIa der Fig. 2 und
Fig. 2b eine Schnittdarstellung entlang der Linie IIb-IIb der Fig. 2,
Fig. 3 eine vergrößerte Draufsicht auf einen Profilblock mit einer weiteren Ausführungsvariante der Erfindung,
Fig. 3a eine Schnittdarstellung entlang der Linie IIIa-IIIa der Fig. 3,
Fig. 4 eine Draufsicht auf einen Profilblock mit einer weiteren Ausführungsvariante der Erfindung,
Fig. 4a eine Schnittdarstellung entlang der Linie IVa-IVa der Fig. 4,
Fig. 4b eine Schnittdarstellung entlang der Linie IVb-IVb der Fig. 4
Fig. 5 eine Draufsicht auf einen Profilblock mit einer nicht erfindungsgemäßen Ausführungsvariante und
Fig. 5a eine Schnittdarstellung entlang der Linie Va-Va der Fig. 5.

Fahrzeugluftreifen gemäß der Erfindung sind für den Einsatz unter winterlichen Fahrbedingungen, insbesondere auf Schnee oder Eis, besonders gut geeignet und sind Reifen in Radialbauart, vorzugsweise für Personenkraftwagen, Vans oder Light Trucks.

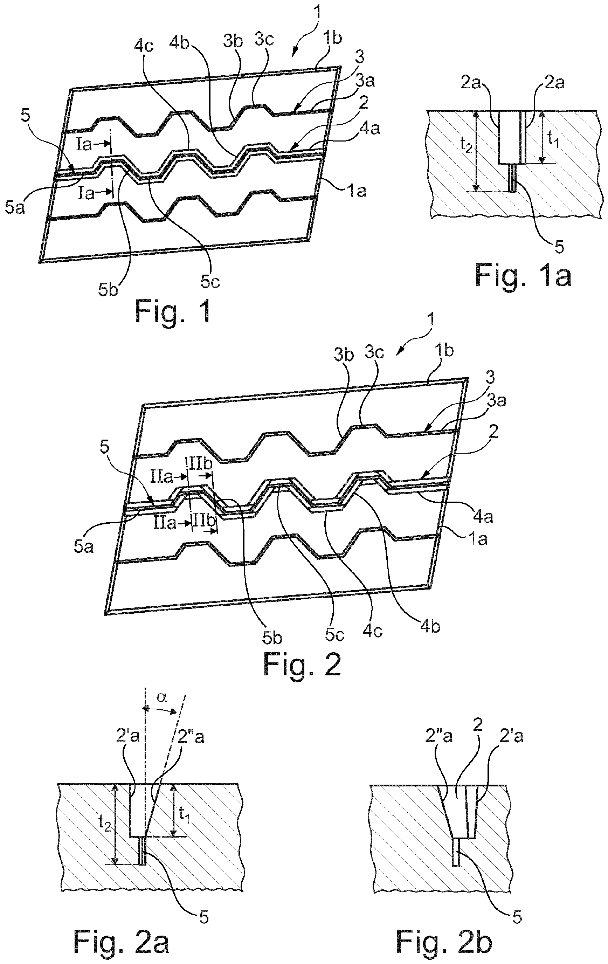

Fig. 1 bis Fig. 5 zeigen jeweils eine Draufsicht auf einen in einer vereinfachten Gestalt dargestellten Profilblock 1, der beispielsweise zu einer in Umfangsrichtung eines Laufstreifens eines Fahrzeugluftreifens umlaufenden Profilblockreihe gehört, die sich insbesondere aus gleich oder gleichartig gestalteten Profilblöcken zusammensetzt. Profilblockreihen mit erfindungsgemäß gestalteten Profilblöcken können laufstreifenrand- bzw. schulterseitig oder im zentralen bzw. mittleren Bereich des Laufstreifens angeordnet sein. Eine Profilblockreihe, die im mittleren Bereich des Laufstreifens angeordnet ist, ist üblicherweise seitlich von in Umfangsrichtung des Laufstreifens verlaufenden Umfangsrillen, begrenzt. Die Profilblöcke in einer schulterseitig verlaufenden Profilblockreihe sind üblicherweise laufstreifeninnenseitig von Rillen begrenzt, die ebenfalls meist Umfangsrillen oder Abschnitte von Umfangsrillen sind aber auch Rillenabschnitte von in Richtung Laufstreifenmitte verlaufenden Schrägrillen und dergleichen sein können. In Umfangsrichtung unmittelbar aufeinanderfolgende Profilblöcke 1 sind voneinander üblicherweise durch je eine Querrille getrennt. Die Profilblöcke 1 weisen somit Profilblockkanten 1a auf, die der Umfangsrichtung des Laufstreifens zugeordnet sind und Profilblockkanten 1b, die der axialen Richtung des Laufstreifens zugeordnet sind und sich vorzugsweise unter einem Winkel ≤ 45° zur axialen Richtung erstrecken.

Die in den Figuren 1 bis 5 dargestellten Profilblöcke 1 sind jeweils in ihrem mittleren Bereich von einer speziellen Quernut 2 und zwischen dieser und den Profilblockkanten 1b von je einem Einschnitt 3 durchquert. Bei den gezeigten Ausführungen erstrecken sich die Quernut 2 und die Einschnitte 3 parallel oder im Wesentlichen parallel zu den Profilblockkanten 1b. Sowohl die Quernut 2 als auch die Einschnitte 3 setzen sich aus zueinander abgewinkelt verlaufenden Abschnitten 4a, 4b, 4c - Quernut 2 - und Abschnitten 3a, 3b und 3c - Einschnitt 3 - wie noch näher beschrieben wird, zusammen, wobei in den in Fig. 1 bis 5 gezeigten Ausführungen die Abschnitte 4b, 4c sowie die Abschnitte 3b, 3c in Trapezform verlaufen, wie ebenfalls noch näher beschrieben wird. Die Abschnitte 4a, 3a sind Endabschnitte, die parallel oder im Wesentlichen parallel zu den Profilblockkanten 1b orientiert sind.

Die Quernut 2 weist in sämtlichen Abschnitten 4a, 4b, 4c eine vorzugsweise konstante Breite auf, welche an der Laufstreifenperipherie 2,0 mm bis 5,0 mm beträgt. Die Quernuten 2 besitzen eine Tiefe t₁ (Fig. 1a, Fig. 2a, Fig. 3a, Fig. 4a und Fig. 5a), die zumindest 2,0 mm und bis zu 60 % der für den jeweiligen Reifen vorgesehenen Profiltiefe beträgt, welche die Tiefe der Hauptrillen, meist Umfangsrillen, des Laufstreifens ist und bei PKW-Reifen üblicherweise 6,5 mm bis 9,0 mm beträgt. Die Tiefe t₁ der Quernuten 2 kann über ihre Erstreckung im Profilblock 1 im erwähnten Bereich variieren. Bei den in Fig. 1, Fig. 3 und Fig. 5 gezeigten Ausführungen weisen die Quernuten 2, wie es insbesondere die zugehörigen Schnittdarstellungen in Fig. 1a, Fig. 3a und Fig. 5a zeigen, Nutflanken 2a auf, welche in radialer Richtung oder unter einem kleinen spitzen Winkel von bis zu 5° zur radialen Richtung verlaufen, derart, dass die Breite der Quernuten 2 Richtung Laufstreifenperipherie größer wird.

Am Boden bzw. am radial inneren Ende der Quernuten 2 schließt in radialer Richtung jeweils ein Einschnitt 5 an, welcher bis in eine Tiefe t₂ (Fig. 1a, Fig. 2a, Fig. 3a, Fig. 4a und Fig. 5a) reichen kann, die der vorgesehenen Profiltiefe entspricht. Der bei sämtlichen dargestellten Ausführungsvarianten vorgesehene Einschnitt 5 weist eine insbesondere konstante Breite von 0,3 mm bis 1,2 mm, insbesondere von 0,4 mm bis 0,9 mm, auf und verläuft über sämtliche Abschnitte 4a, 4b und 4c der Quernuten 2. Der Einschnitt 5 kann stellen- oder abschnittsweise seine Mindesttiefe - ermittelt vom radial inneren Ende bzw. vom Boden der Quernut 2 - von 1,0 mm aufweisen.

Wie bereits erwähnt, setzen sich die Quernuten 2 bei den gezeigten Ausführungsvarianten, bis auf Endabschnitte 4a, die parallel oder im Wesentlichen parallel zu den Profilblockkanten 1b verlaufen, aus Abschnitten 4b, 4c zusammen, die gemeinsam eine Anzahl von aneinander anschließenden, abwechselnd in die eine und in die andere Umfangsrichtung bzw. abwechselnd zur einen und zur anderen Profilblockkante 1b weisenden, basislosen, gleichschenkeligen, übereinstimmend oder weitgehend übereinstimmend ausgeführten Trapezen bilden. Die Abschnitte 4b sind Trapezschenkel-Abschnitte, welche in Draufsicht miteinander einen Winkel von insbesondere 110° bis 160° einschließen, die Abschnitte 4c sind die Abschnitte 4b verbindende Abschnitte.

Bei der in Fig. 1 und 1a dargestellten Variante folgt der Einschnitt 5 dem Verlauf der Abschnitte 4a, 4b und 4c der Quernut 2 mit entlang der Mitte des Bodens der Quernut 2 verlaufenden Abschnitten 5a, 5b, 5c, nämlich Endabschnitten 5a, Trapezschenkel-Abschnitten 5b und verbindenden Abschnitten 5c.

Bei der in Fig. 2 und 2a gezeigten Ausführung verläuft die Quernut 2 analog zu Fig. 1 und weist daher Endabschnitte 4a, Trapezschenkel-Abschnitte 4b und verbindende Abschnitte 4c auf. In jedem Abschnitt 4a, 4b und 4c weist die Quernut 2 einen in radialer Richtung oder unter einem Winkel von bis zu 5° zur radialen Richtung verlaufende Nutflanke 2'a und eine dieser gegenüberliegende Nutflanke 2"a auf, welche unter einem größeren Winkel α zur radialen Richtung geneigt ist, wobei dieser Winkel 10° bis 20°, insbesondere 15°, beträgt. In den einzelnen aufeinander folgenden Abschnitte 4a, 4b, 4c wechseln jeweils die Nutflanken 2'a, 2"a ihre Position, wie es insbesondere die Schnittdarstellungen in Fig. 2a und Fig. 2b zeigen. Der vom Boden der Quernut 2 ausgehende Einschnitt 5 schließt jeweils unmittelbar mit einer seiner Einschnittwände an die Nutflanke 2"a mit der größeren Neigung zur radialen Richtung an.

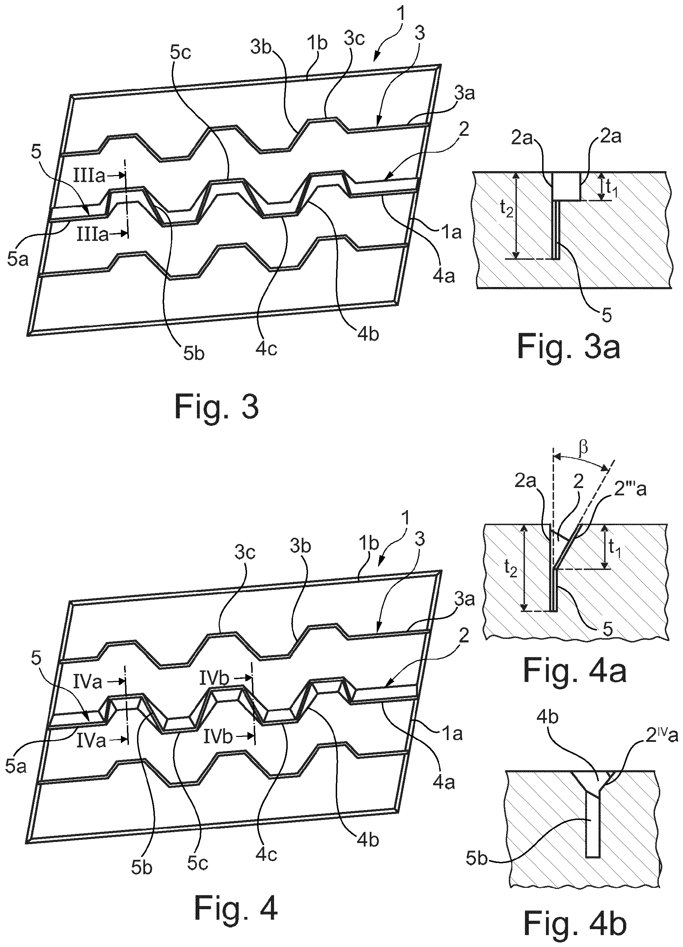

Auch bei der in Fig. 3 und Fig. 3a gezeigten Ausführungsvariante weist die Quernut 2 analog zu jener gemäß Fig. 1 einen Verlauf mit zwei Endabschnitten 4a und zwischen diesen Endabschnitten trapezförmig verlaufenden Abschnitten, also Trapezschenkel-Abschnitten 4b und verbindenden Abschnitten 4c, auf. In den Endabschnitten 4a und den verbindenden Abschnitten 4c schließen die Einschnittabschnitte 5a und 5c jeweils mit einer Einschnittwand an die in Draufsicht längere Nutflanke 2a an, sodass in den Abschnitten 4c der Einschnittabschnitt 5c jeweils bei der im Abschnitt 4c weiter außen befindlichen Nutflanke 2a verläuft. In den Trapezschenkel-Abschnitten 4b der Quernut 2 verlaufen die Trapezschenkel-Abschnitte 5b des Einschnittes 5 zwischen den Enden der Abschnitte 5a und 5c bzw. den Enden von Abschnitten 5c. Die Trapezschenkel-Abschnitte 5b der Einschnitte 5 verlaufen daher in den betreffenden Trapezschenkel-Abschnitten 4b der Quernut 2 in Draufsicht schräg über den Boden der Trapezschenkel-Abschnitte 4b.

Fig. 4 und 4a zeigen eine Variante der in Fig. 3 und 3a dargestellten Ausführungsform. In den Endabschnitten 4a und den verbindenden Abschnitten 4c weist die Quernut 2 verläuft jeweils die in Draufsicht längere Nutflanke 2a in radialer Richtung oder unter einem Winkel von bis zu 5° zur radialen Richtung, die gegenüberliegende Nutflanke 2‴a ist unter einem Winkel β von 30° bis 40° zur radialen Richtung geneigt, wobei jede Nutflanke 2a, 2‴a an ihrem radial inneren Ende in je eine Einschnittwand des jeweiligen Abschnittes 5a, 5c des Einschnittes 5 übergeht. In den Trapezschenkel-Abschnitten 4b sind die Nutflanken 2^{IV}a dreieckige, unter einem konstanten Winkel zur radialen Richtung orientierte Flächen, welche ihre geringste, Null betragende radiale Erstreckung jeweils beim Eckpunkt zur Nutflanke 2a eines Abschnittes 4c oder 4a aufweisen, ihre größte radiale Erstreckung bei der Eckschnittstelle zur Nutflanke 2‴a eines Abschnittes 4c oder 4a. Die radial äußeren Kanten der Einschnittwände des Einschnittabschnittes 5b verlaufen daher zur radialen Richtung entsprechend geneigt.

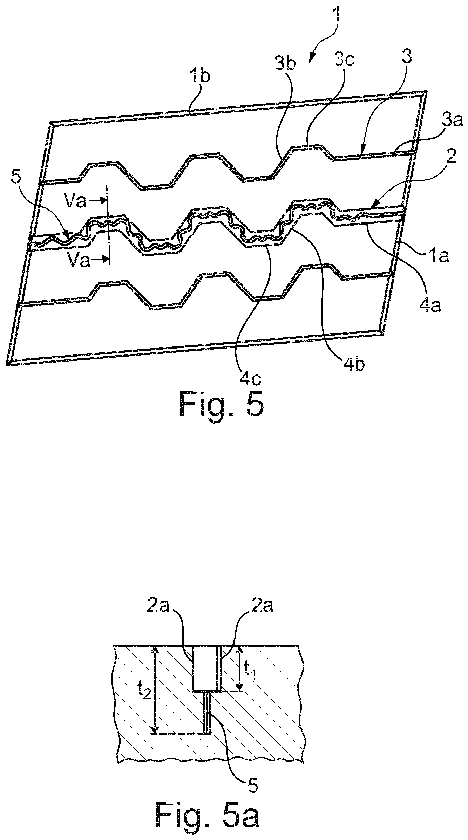

Bei der in Fig. 5 und 5a gezeigten Ausführungsform weist die Quernut 2 analog zu Fig. 1 ausgeführte und verlaufende Endabschnitte 4a, Trapezschenkel-Abschnitte 4b und verbindende Abschnitte 4c auf. Entlang des Bodens der Quernut 2 verläuft der Einschnitt 5 in Draufsicht in Wellenform mit einer Wellenlänge, die mindestens der Erstreckungslänge jedes Abschnittes 4a, 4b, 4c entspricht und mit einer Amplitude, die zumindest 25 % der Breite des Bodens der Quernut 2 beträgt.

Bei sämtlichen Ausführungsvarianten sind im Profilblock 1 zwischen der Quernut 2 und der Profilblockkante 1a weitere Einschnitte 3 ausgebildet, bei den gezeigten Ausführungen jeweils ein Einschnitt 3, wobei diese Einschnitte 3 analog zur Quernut 2 trapezförmig verlaufen. Bei weiteren, nicht dargestellten Ausführungsvarianten kann zwischen der Quernut 2 und der jeweiligen Profilblockkante 1a auch mehr als ein Einschnitt 3 vorgesehen sein. Diese Einschnitte 3 weisen eine Breite auf, die analog zu den Einschnitten 5 0,3 mm bis 1,2 mm, insbesondere 0,4 mm bis 0,9 mm, beträgt. Die Tiefe der Einschnitte 3 kann zumindest abschnittsweise der vorgesehenen Profiltiefe entsprechen, üblicherweise werden die Einschnitte 3 über ihre Erstreckung bzw. ihren Verlauf in unterschiedlichen bzw. variierenden Tiefen ausgeführt. Ihre Mindesttiefe beträgt 2,0 mm. Darüber hinaus können auf nicht dargestellte Weise auch sogenannte Mikroeinschnitte im Profilblock 1 vorgesehen sein, Einschnitte, die eine Breite < 0,4 mm, insbesondere 0,2 mm bis 0,3 mm, aufweisen und zwischen den Einschnitten 3 und der Quernut 2 oder zwischen den Einschnitten 3 und den Profilblockkanten 1b vorgesehen sein können.

Die Quernut 2 kann ferner die Funktion eines Winter-TWI (Tread Wear Indikators) übernehmen, wenn sie derart tief ausgeführt wird, dass der Einschnitt in der für Winterreifen vorgeschriebenen Restprofiltiefe anschließt.

Darüber hinaus kann die Quernut im Profilblock entlang einer Zick-Zack-Form oder Wellenform verlaufen, ebenso der am Boden anschließende Einschnitt sowie weitere im Profilblock ausgebildete Einschnitte und Mikroeinschnitte.

### Bezugsziffernliste

- 1: Profilblock
- 1a, 1b: Profilblockkante
- 2: Quernut
- 2a, 2'a: Nutflanke
- 2ʺa, 2‴a, 2^{IV}a: Nutflanke
- 3: Einschnitt
- 3a, 3b, 3c: Abschnitt
- 4a, 4b, 4c: Abschnitt
- 5: Einschnitt
- 5a, 5b, 5c: Abschnitt
- α, β: Winkel
- t₁, t₂: Tiefe

## Patentansprüche

1. Fahrzeugluftreifen mit einem Laufstreifen mit zumindest einer Profilrippe oder zumindest einer Profilblöcke (1) aufweisenden oder profilblockartig strukturierten Profilblockreihe sowie mit in der vorgesehen Profiltiefe ausgeführten Rillen, wobei zumindest eine Profilrippe bzw. die Profilblöcke in einer Blockreihe mit unter einem Winkel ≤ 45° zur axialen Richtung verlaufenden Quernuten (2), welche an der Laufstreifenperipherie eine Breite von 2,0 mm bis 5,0 mm und eine Tiefe (t₁) von höchstens 60 % der Profiltiefe aufweisen, versehen ist bzw. sind,
wobei sich jede Quernut (2) aus Abschnitten (4a, 4b, 4c) zusammensetzt, die zueinander abgewinkelt verlaufen, wobei über die Erstreckung der Quernut (2) an ihrem Boden bzw. ihrem radial inneren Ende ein Einschnitt (5) anschließt, welcher eine Breite von 0,3 mm bis 1,2 mm aufweist und in radialer Richtung bis in eine Tiefe (t₂) reicht, die höchstens der Profiltiefe entspricht, wobei der Einschnitt (5) dem Verlauf der abgewinkelten Abschnitte (4a, 4b, 4c) der Quernut (2) folgt,
**dadurch gekennzeichnet,**
**dass** die Profilrippe bzw. die Profilblöcke der Blockreihe von sich im Wesentlichen parallel zueinander und parallel zu den Quernuten (2) erstreckenden Einschnitten (3) mit einer Breite von 0,3 mm bis 1,2 mm durchquert ist bzw. sind, wobei Einschnitte (3) vorgesehen sind, zwischen welchen jeweils eine der sich parallel zu den Einschnitten (3) erstreckenden Quernuten (2) vorgesehen ist,
wobei der Einschnitt (5), welcher dem Verlauf der abgewinkelten Abschnitte (4a, 4b, 4c) der Quernut (2) folgt, Einschnittabschnitte (5a, 5b, 5c) aufweist, die in den aufeinanderfolgenden Abschnitten (4a, 4b, 4c) der Quernut (2) abwechselnd mit einer Einschnittwand an die eine und die andere Nutflanke (2a) der Quernut (2) anschließen.

2. Fahrzeugluftreifen nach Anspruch 1, **dadurch gekennzeichnet, dass** sich der Einschnitt (5) aus zueinander abgewinkelt verlaufenden Abschnitten (5a, 5b, 5c) zusammensetzt, die dem Verlauf der abgewinkelten Abschnitte (4a, 4b, 4c) der Quernut (2) folgen.

3. Fahrzeugluftreifen nach Anspruch 1 oder 2, **dadurch gekennzeichnet, dass** die Quernut (2), insbesondere in sämtlichen Abschnitten (4a, 4b, 4c), Nutflanken (2a) aufweist, die in radialer Richtung oder unter einem Winkel, welcher um bis zu 5° von der radialen Richtung abweicht, verlaufen.

4. Fahrzeugluftreifen nach einem der Ansprüche 1 bis 3, **dadurch gekennzeichnet, dass** die Abschnitte der Quernut, gegebenenfalls bis auf ihre Endabschnitte, zickzack- oder wellenförmig verlaufen.

5. Fahrzeugluftreifen nach einem der Ansprüche 1 bis 3, **dadurch gekennzeichnet, dass** die Abschnitte (4b, 4c) der Quernut (2), gegebenenfalls bis auf ihre Endabschnitte (4a), trapezförmig verlaufen.

6. Fahrzeugluftreifen nach Anspruch 5, **dadurch gekennzeichnet, dass** die trapezförmig verlaufenden Abschnitte (4b, 4c) Trapezschenkel-Abschnitte (4b) und diese verbindende Abschnitte (4c) aufweisen, welche in Draufsicht eine Anzahl von aneinander anschließenden, abwechselnd zur einen und zur anderen Umfangsrichtung weisenden, basislosen, vorzugsweise gleichschenkeligen Trapezen bilden, wobei die Trapezschenkel-Abschnitte (4b) und die diese verbindenden Abschnitte (4c) in Draufsicht eine längere und eine kürzere Nutflanke aufweisen.

7. Fahrzeugluftreifen nach Anspruch 5 oder 6, **dadurch gekennzeichnet, dass** die Nutflanken (2a) der Quernut (2) in sämtlichen Abschnitten (4a, 4b, 4c) in radialer Richtung oder unter einem Winkel von bis zu 5° zur radialen Richtung verlaufen, wobei in den verbindenden Abschnitten (4c) die Einschnittabschnitte (5c) jeweils mit einer Einschnittwand an die in Draufsicht längere Nutflanke (2a) anschließen, und wobei in den Trapezschenkel-Abschnitten (4b) der Quernut (2) die Abschnitte (5b) des Einschnittes (5) die Enden der Abschnitte (5c) des Einschnittes (5) in den verbindenden Abschnitten (4c) miteinander verbinden (Fig. 3, 3a).

8. Fahrzeugluftreifen nach Anspruch 5 oder 6, **dadurch gekennzeichnet, dass** in den die Trapezschenkel-Abschnitte (4b) verbindenden Abschnitten (4c) der Quernut (2) die in Draufsicht längere Nutflanke (2'a) in radialer Richtung oder unter einem Winkel von bis zu 5° zur radialen Richtung verläuft, wobei die dieser gegenüberliegende Nutflanke (2‴a) unter einem Winkel (a) von 10° bis 20° zur radialen Richtung verläuft, wobei in den aufeinanderfolgenden Abschnitten (4a, 4b, 4c) der Quernut (2) die Position der Nutflanken (2'a, 2"a) abwechselt und der vom Boden der Quernut (2) ausgehende Einschnitt (5) mit einer Einschnittwand jeweils an jene Nutflanke (2"a) anschließt, welche unter dem Winkel (a) von 10° bis 20° zur radialen Richtung verläuft (Fig. 2, 2a, 2b).

9. Fahrzeugluftreifen nach Anspruch 5 oder 6, **dadurch gekennzeichnet, dass** in den verbindenden Abschnitten (4c) die in Draufsicht längere Nutflanke (2a) in radialer Richtung oder unter einem Winkel von bis zu 5° zur radialen Richtung verläuft und die gegenüberliegende Nutflanke (2‴a) unter einem Winkel (β) von 30° bis 40° zur radialen Richtung geneigt ist, wobei jede dieser Nutflanken (2a, 2‴a) an ihrem radial inneren Ende in je eine Einschnittwand des betreffenden Abschnittes (5c) des Einschnittes (5) übergeht, und wobei in den Trapezschenkel-Abschnitten (4b) die Nutflanken (2^{IV}a) dreieckige, unter einem konstanten Winkel zur radialen Richtung orientierte Flächen sind, welche ihre geringste, Null betragende radiale Erstreckung jeweils beim Eckpunkt zu der in radialer Richtung verlaufenden Nutflanke (2a) eines verbindenden Abschnittes (4c) und ihre größte radiale Erstreckung bei der Eckschnittstelle zur Nutflanke (2‴a) eines verbindenden Abschnittes (4c) aufweisen (Fig. 4, 4a, 4b).

## Claims

1. Pneumatic vehicle tyre having a tread with at least one profile rib or at least one row of profile blocks having profile blocks (1) or structured in the manner of profile blocks and also with channels made to the intended profile depth, wherein at least one profile rib or the profile blocks in a row of profile blocks is or are provided with transverse grooves (2), which run at an angle of ≤ 45° in relation to the axial direction and have at the periphery of the tread a width of 2.0 mm to 5.0 mm and a depth (t₁) of at most 60% of the profile depth,
wherein each transverse groove (2) is made up of portions (4a, 4b, 4c), which run in an angled fashion with respect to one another, wherein, over the extent of the transverse groove (2), its bottom or its radially inner end is adjoined by a sipe (5), which has a width of 0.3 mm to 1.2 mm and reaches in the radial direction to a depth (t²), which corresponds at most to the profile depth, wherein the sipe (5) follows the path of the angled portions (4a, 4b, 4c) of the transverse groove (2),
**characterized**
**in that**
the profile rib or the profile blocks of the row of blocks is or are crossed by sipes (3) extending substantially parallel to one another and parallel to the transverse grooves (2) and having a width of 0.3 mm to 1.2 mm, wherein sipes (3) are provided such that between them in each case one of the transverse grooves (2) extending parallel to the sipes (3) is provided,
wherein the sipe (5) that follows the path of the angled portions (4a, 4b, 4c) of the transverse groove (2) has sipe portions (5a, 5b, 5c) which in the successive portions (4a, 4b, 4c) of the transverse groove (2) alternately adjoin with a sipe wall one and the other groove flank (2a) of the transverse groove (2).

2. Pneumatic vehicle tyre according to Claim 1, **characterized in that** the sipe (5) is made up of portions (5a, 5b, 5c) running in an angled fashion with respect to one another that follow the path of the angled portions (4a, 4b, 4c) of the transverse groove (2).

3. Pneumatic vehicle tyre according to Claim 1 or 2, **characterized in that** the transverse groove (2) has, in particular in all portions (4a, 4b, 4c), groove flanks (2a), which run in the radial direction or at an angle that deviates from the radial direction by up to 5°.

4. Pneumatic vehicle tyre according to one of Claims 1 to 3, **characterized in that** the portions of the transverse groove run in a zigzagging or wave-shaped form, possibly with the exception of their end portions.

5. Pneumatic vehicle tyre according to one of Claims 1 to 3, **characterized in that** the portions (4b, 4c) of the transverse groove (2) run in a trapezoidal form, possibly with the exception of their end portions (4a) .

6. Pneumatic vehicle tyre according to Claim 5, **characterized in that** the portions (4b, 4c) running in a trapezoidal form have trapezoid leg portions (4b) and portions (4c) which connect them and, in plan view, form a number of baseless, preferably isosceles trapezoids adjoining one another and facing alternately in one and the other circumferential direction, wherein the trapezoid leg portions (4b) and the portions (4c) connecting them have in plan view a longer groove flank and a shorter groove flank.

7. Pneumatic vehicle tyre according to Claim 5 or 6, **characterized in that** the groove flanks (2a) of the transverse groove (2) in all portions (4a, 4b, 4c) run in the radial direction at an angle of up to 5° in relation to the radial direction, wherein, in the connecting portions (4c), the sipe portions (5c) respectively adjoin with a sipe wall the longer groove flank (2a) in plan view, and wherein, in the trapezoid leg portions (4b) of the transverse groove (2), the portions (5b) of the sipe (5) connect the ends of the portions (5c) of the sipe (5) to one another in the connecting portions (4c) (Fig. 3, 3a).

8. Pneumatic vehicle tyre according to Claim 5 or 6, **characterized in that**, in the portions (4c) of the transverse groove (2) connecting the trapezoid leg portions (4b), the longer groove flank (2'a) in plan view runs in the radial direction or at an angle of up to 5° in relation to the radial direction, wherein the groove flank (2‴a) opposite this longer flank runs at an angle (α) of 10° to 20° in relation to the radial direction, wherein, in the successive portions (4a, 4b, 4c) of the transverse groove (2), the position of the groove flanks (2'a, 2"a) alternates and the sipe (5) extending from the bottom of the transverse groove (2) respectively adjoins with a sipe wall that groove flank (2"a) that runs at the angle (α) of 10° to 20° in relation to the radial direction (Fig. 2, 2a, 2b).

9. Pneumatic vehicle tyre according to Claim 5 or 6, **characterized in that**, in the connecting portions (4c), the longer groove flank (2a) in plan view runs in the radial direction or at an angle of up to 5° in relation to the radial direction and the opposite groove flank (2‴a) is inclined at an angle (β) of 30° to 40° in relation to the radial direction, wherein each of these groove flanks (2a, 2‴a) goes over at its radially inner end in each case into a sipe wall of the respective portion (5c) of the sipe (5), and wherein, in the trapezoid leg portions (4b), the groove flanks (2^{IV}a) are triangular areas oriented at a constant angle in relation to the radial direction, which have their smallest radial extent, of zero, in each case at the corner point to the groove flank (2a) running in the radial direction of a connecting portion (4c) and their greatest radial extent at the corner intersection with the groove flank (2‴a) of a connecting portion (4c) (Fig. 4, 4a, 4b).

## Revendications

1. Pneumatique de véhicule muni d'une bande de roulement munie d'au moins une nervure de profil ou d'au moins une rangée de blocs de profil présentant des blocs de profil (1) ou structurée à la manière de blocs de profil, ainsi que munie de rainures réalisées à la profondeur de profil prévue, au moins une nervure de profil ou les blocs de profil dans une rangée de blocs étant pourvus de sillons transversaux (2) s'étendant à un angle ≤ 45° par rapport à la direction axiale, qui présentent à la périphérie de la bande de roulement une largeur de 2,0 mm à 5,0 mm et une profondeur (t₁) d'au plus 60 % de la profondeur de profil,
chaque sillon transversal (2) se composant de sections (4a, 4b, 4c) qui s'étendent sous forme coudée les unes par rapport aux autres, une entaille (5) se raccordant à son fond ou à son extrémité radialement intérieure sur l'extension du sillon transversal (2), qui présente une largeur de 0,3 mm à 1,2 mm et atteint dans la direction radiale une profondeur (t₂) qui correspond au plus à la profondeur de profil, l'entaille (5) suivant l'étendue des sections coudées (4a, 4b, 4c) du sillon transversal (2),
**caractérisé en ce que**
la nervure de profil ou les blocs de profil de la rangée de blocs est ou sont traversés par des entailles (3) d'une largeur de 0,3 mm à 1,2 mm, s'étendant essentiellement parallèlement les unes aux autres et parallèlement aux sillons transversaux (2), des entailles (3) étant prévues entre lesquelles un des sillons transversaux (2) s'étendant parallèlement aux entailles (3) est respectivement prévu,
l'entaille (5) qui suit l'étendue des sections coudées (4a, 4b, 4c) du sillon transversal (2) présentant des sections d'entaille (5a, 5b, 5c) qui, dans les sections successives (4a, 4b, 4c) du sillon transversal (2), se raccordent alternativement par une paroi d'entaille à l'un et à l'autre flanc de sillon (2a) du sillon transversal (2).

2. Pneumatique de véhicule selon la revendication 1, **caractérisé en ce que** l'entaille (5) se compose de sections (5a, 5b, 5c) s'étendant sous forme coudée les unes par rapport aux autres, qui suivent l'étendue des sections coudées (4a, 4b, 4c) du sillon transversal (2) .

3. Pneumatique de véhicule selon la revendication 1 ou 2, **caractérisé en ce que** le sillon transversal (2) présente, en particulier dans toutes les sections (4a, 4b, 4c), des flancs de sillon (2a) qui s'étendent dans la direction radiale ou à un angle qui s'écarte de jusqu'à 5° de la direction radiale.

4. Pneumatique de véhicule selon l'une quelconque des revendications 1 à 3, **caractérisé en ce que** les sections du sillon transversal, le cas échéant à l'exception de leurs sections d'extrémité, s'étendent en zigzag ou sous forme ondulée.

5. Pneumatique de véhicule selon l'une quelconque des revendications 1 à 3, **caractérisé en ce que** les sections (4b, 4c) du sillon transversal (2), le cas échéant à l'exception de leurs sections d'extrémité (4a), s'étendent sous forme trapézoïdale.

6. Pneumatique de véhicule selon la revendication 5, **caractérisé en ce que** les sections (4b, 4c) s'étendant sous forme trapézoïdale présentent des sections de branche de trapèze (4b) et des sections (4c) reliant celles-ci qui, en vue de dessus, forment un nombre de trapèzes sans base, de préférence isocèles, se raccordant les uns aux autres, pointant alternativement vers l'une et l'autre direction circonférentielle, les sections de branche de trapèze (4b) et les sections (4c) reliant celles-ci présentant, en vue de dessus, un flanc de sillon plus long et un flanc de sillon plus court.

7. Pneumatique de véhicule selon la revendication 5 ou 6, **caractérisé en ce que** les flancs de sillon (2a) du sillon transversal (2) s'étendent dans toutes les sections (4a, 4b, 4c) dans la direction radiale ou à un angle de jusqu'à 5° par rapport à la direction radiale ; dans les sections de liaison (4c), les sections d'entaille (5c) se raccordant respectivement par une paroi d'entaille au flanc de sillon (2a) plus long en vue de dessus et, dans les sections de branche de trapèze (4b) du sillon transversal (2), les sections (5b) de l'entaille (5) reliant entre elles les extrémités des sections (5c) de l'entaille (5) dans les sections de liaison (4c) (Fig. 3, 3a).

8. Pneumatique de véhicule selon la revendication 5 ou 6, **caractérisé en ce que**, dans les sections (4c) du sillon transversal (2) reliant les sections de branche de trapèze (4b), le flanc de sillon (2'a) plus long en vue de dessus s'étend dans la direction radiale ou à un angle de jusqu'à 5° par rapport à la direction radiale, le flanc de sillon (2‴a) opposé à celui-ci s'étendant à un angle (α) de 10° à 20° par rapport à la direction radiale, la position des flancs de sillon (2'a, 2"a) alternant dans les sections successives (4a, 4b, 4c) du sillon transversal (2) et l'entaille (5) partant du fond du sillon transversal (2) se raccordant par une paroi d'entaille respectivement au flanc de sillon (2"a) qui s'étend à l'angle (a) de 10° à 20° par rapport à la direction radiale (Fig. 2, 2a, 2b).

9. Pneumatique de véhicule selon la revendication 5 ou 6, **caractérisé en ce que**, dans les sections de liaison (4c), le flanc de sillon (2a) plus long en vue de dessus s'étend dans la direction radiale ou à un angle de jusqu'à 5° par rapport à la direction radiale et le flanc de sillon opposé (2‴a) est incliné d'un angle (β) de 30° à 40° par rapport à la direction radiale, chacun de ces flancs de sillon (2a, 2‴a) étant poursuivi à son extrémité radialement intérieure par une paroi d'entaille de la section (5c) concernée de l'entaille (5) et, dans les sections de branche de trapèze (4b), les flancs de sillon (2^{IV}a) étant des surfaces triangulaires orientées à un angle constant par rapport à la direction radiale, qui présentent leur plus petite extension radiale, égale à zéro, respectivement au coin vers le flanc de sillon (2a) s'étendant dans la direction radiale d'une section de liaison (4c) et leur plus grande extension radiale à la jonction de coin vers le flanc de sillon (2‴a) d'une section de liaison (4c) (Fig. 4, 4a, 4b).
